# EUROPEAN PATENT SPECIFICATION

(11) **EP 0 223 311 B1**
(45) Date of publication and mention of the grant of the patent: **31.03.1993**
(21) Application number: 86202026.0
(22) Date of filing: 17.11.1986
(51) Int. Cl.: H04B 1/20

(54) **Remote control system**
Fernsteuersystem
Système de commande à distance

(30) Priority: 19.11.1985 JP 257677/85; 04.12.1985 JP 271619/85
(43) Date of publication of application: 27.05.1987
(73) Proprietor: Philips Electronics N.V., 5621 BA Eindhoven (NL)
(72) Inventor: Kawanaka, Yoshikazu, NL-5656 AA Eindhoven (NL)
(74) Representative: Kooiman, Josephus Johannes Antonius

(56) References cited:
- EP-A- 0 122 548
- EP-A- 0 203 668

## Description

The present invention generally relates to a remote control system for use with audio and/or video consumer systems, comprising a plurality of units, of the same kind.

### A(2) Description of the prior art

Many methods have been proposed for remotely controlling different units of an audio and/or video system. In a first method each unit has its own receiver and a corresponding transmitter associated therewith. This is often called "individual control". In a second method called "distributed control" all units of the system are connected to a central remote control receiver which routes received control signals to the appropriate unit of the system.

In case of individual control, the number of remote control transmitters and receivers is equal to the number of units in the system. This means a waste of material and when the number of units of the system is large, it is difficult to select the appropriate transmitter.

In case of distributed control the number of connections is proportional to the number of units which makes installation complicated.

In order to avoid all these problems it has already also been proposed to incorporate an individual receiver in each unit of a video/audio system and to use one single transmitter to control each unit. Such transmitter includes a plurality of selection switches, one of each unit of the system. In such transmitter each command is embedded in a control packet having a predetermined format that can be processed by the unit for which it is intended.

In such a system problems now arise when two or more units of the same kind, for example two similar VCRs, two similar displays, etc are part of the system. This transmitter cannot distinguish between similar units.

It is noted that in EP-A-0 112 548 a remote control transmitter is disclosed which is capable of controlling units of the same kind, but manufactured by different manufacturers and thus requiring control packets of different formats.

### B. Summary of the invention

It is an object of the present invention to provide a remote control system capable of controlling a plurality of like units in an audio and/or video system.

It is also an object of the present invention to provide a remote control system which does not show the drawbacks of the individual or distributed remote control system.

According to the present invention the control packet also includes a unit type code (VCR, TV) and a unit number code (1, 2, 3, ...). Each receiver being adapted to compare the unit type code and unit number code of the received control packet with an internally store reference unit type code and unit number code and to respond on the control command in the received control packet when the received unit type and unit number code match the corresponding internally stored reference codes.

### C. Short description of the Figures.

Figure 1 is a blockdiagram that shows an application example of the remote control transmitter.

Figure 2 shows an example of the transmitting format.

Figure 3 is a blockdiagram that shows an example of the remote control receiver.

Figure 4 is a blockdiagram that shows an example of the controller, that is provided in each unit.

### D. Description of an embodiment.

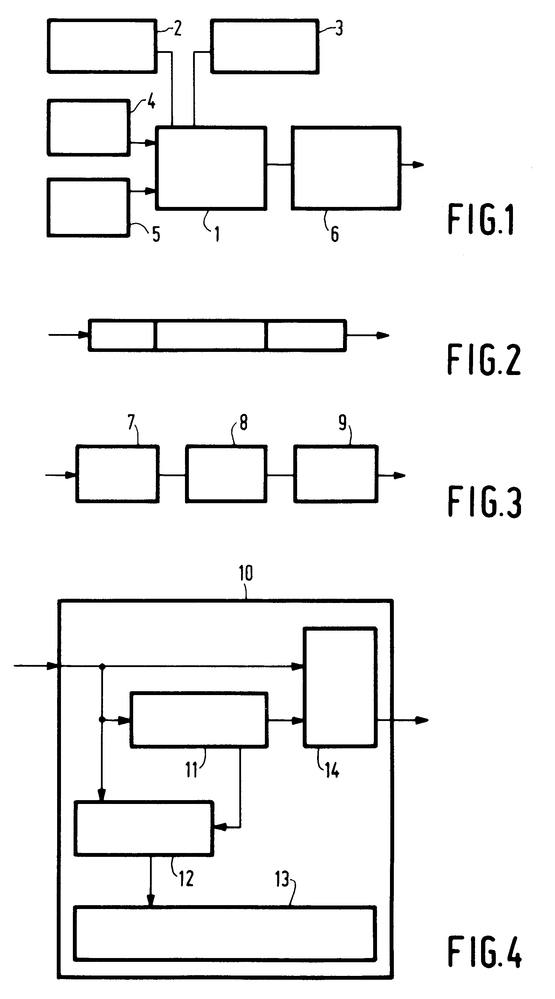

Figure 1 shows the transmitter of the remote control system. It comprises a code generator 1 having connected thereto a unit number keyboard 2 for keying in a unit number, a unit selection keyboard 4 for selecting the unit type and a command keyboard 5 for selecting a command. A display 3 is also connected to the code generator 1 for displaying the selected unit number, unit type, and the command.

After depression of the selected keys the code generator 1 produces a command packet of the type shown in Figure 2 . It has a packet header, a characteristic code and a command code. This command packet is applied to a modulator 6 and sent wireless by infrared or by ultrasonic rays to a remotely placed receiver. The characteristic code includes a unit type code defining the type of unit to be controlled for instance VCR, and a unit number code defining which one of the defined unit types (so which VCR) must be controlled. To this end the units of the same type are all connected in cascade, so that a command packet dribbles down the cascaded units. One of the units functions thereby as a master unit receiving the signals originally generated by the transmitter. The other units connected in cascade to this master unit are slave units. The principle parts of the receivers in master units and slave units are the same.

Such receiver is shown in Figure 3 and includes a demodulator 7 that receives the output of modulator 6, a command routing circuit 8 and a modulator 9. The command routing circuit 8 includes a command controller 10 shown in detail in Figure 4. It has an input for receiving the unit number n selected by the user and sent to the receiver by the remote control transmitter, or produced by a preceding unit. This unit number is applied to a unit number processor 11 in which this unit number is checked. When the unit type is correct and the unit number n is equal to the lowest possible number 0 it is concluded that the command code in the command packet is allocated to this particular unit. When the received unit number n is not equal to the lowest possible number 0, then unit number processor 11 produces a new unit number equal to n-1 which through a gate circuit 14 is applied to a subsequent unit connected in cascade thereto. The unit number selected by the user dribbles down the cascade of units and a one is subtracted therefrom in each unit until it has become 0, and the unit receiving this 0 unit number is controlled by the associated command code. To that end the command controller 10 further includes a command processor 12 which produces a command which is applied to control circuit 13.

Unit number processor 11 thus simply includes a subtractor circuit and without the need of special complicated circuitry or special programmes a number of units of the same type can be remotely controlled by the user, using only one remote control transmitter.

## Claims

1. A remote control system for controlling a plurality of units in an audio and/or video system, comprising a transmitter for transmitting a control packet (Fig. 2) including a control command and a unit type code characterizing the kind of unit (TV, VCR, CD-player etc.) which the user wants to control, each of said units has associated therewith a local unit type code, and comprises remote control receiving means (7) for receiving a control packet, and responding means (8, 10) for responding to the control command embedded in the control packet, when appropriate, characterized in that for distinguishing different units of the same kind in the audio and/or video system which are able to respond to the same commands, each unit has allocated thereto a local unit number code (1, 2, 3, ...) indicating its number in the audio and/or video system; the control packet further including a unit number code indicating that unit of the plurality of like units for which the associated command is intended; the responding means (8, 10) of a unit being adapted to respond to a command when the received control packet embedding that command includes both a unit type code and a unit number code matching the local unit type code and the local unit number code of that unit respectively.

2. A remote control system as claimed in Claim 1 wherein one of the remote control receivers associated with the different units is a master receiver adapted to receive the control packet transmitted by the transmitter, and wherein the further remote control receiver associated with the other units of the system are slave receivers which are connected in cascade, which cascade connection of slave receiver is connected in cascade to the master receiver so that a received control packet dribbles down the cascade of receivers.

3. A remote control system as claimed in Claims 1 and 2 wherein in the master and in each slave receiver the same unit number code is stored and each receiver is provided with means (11) for changing the unit number code of the control packet applied thereto, to define a unit having a lower position in the string of remote control receivers.

## Patentansprüche

1. Fernsteuersystem zum Steuern einer Anzahl Einheiten in einem Audio- und/oder Video-System mit einem Sender zum Übertragen eines Steuerpakets (Fig. 2) mit einem Steuerbefehl und einem Einheit-Typencode, der die Art derjenigen Einheit bezeichnet (TV, VCR, CD-Spieler usw.), die der Gebraucher zu steuern wünscht, wobei jede der genannten Einheiten einen zugeordneten lokalen Einheit-Typencode aufweist und Fernsteuerempfangsmittel (7) enthält zum Empfangen eines Steuerpakets, sowie Reaktionsmittel (8, 10) zum Reagieren auf den in dem Steuerpaket verpackten Steuerbefehl, falls es das geeignete Paket ist, dadurch gekennzeichnet, daß zum Unterscheiden zwischen verschiedenen Einheiten derselben Art in dem Audio- und/oder Video-System, die auf denselben Befehl reagieren können, jede Einheit einen zugeordneten lokalen Einheit-Nummercode (1, 2, 3, ...) aufweist, der ihre Nummer in dem Audio- und/oder Video-System angibt; wobei das Steuerpaket weiterhin einen Einheit-Nummercode aufweist, der diejenige Einheit der Anzahl gleicher Einheiten bezeichnet, für die der zugeordnete Befehl gemeint ist; wobei die Reaktionsmittel (8, 10) einer Einheit dazu dienen, auf einen Befehl zu reagieren, wenn das empfangene Steuerpaket mit dem verpackten Befehl einen Einheit-Typencode sowie einen Einheit-Nummercode aufweist, der dem lokalen Einheit-Typencode und dem lokalen Einheit-Nummercode der betreffenden Einheit entspricht.

2. Fernsteuersystem nach Anspruch 1, wobei einer der den jeweiligen Einheiten zugeordneten Fernsteuerempfänger ein Meister-Empfänger ist zum Empfangen des von dem Sender übertragenen Steuerpakets, und wobei die weiteren mit den anderen Einheiten der Systems zusammenarbeitenden Fernsteuerempfänger in Kaskade geschaltete Sklaven-Empfänger sind, wobei diese Kaskadenschaltung der Sklaven-Empfänger mit dem Meister-Empfänger derart in Kaskade geschaltet ist, daß ein empfangenes Steuerpaket über die kaskadengeschalteten Empfänger heruntersickert.

3. Fernsteuersystem nach Anspruch 1 und 2, wobei in dem Meister- und in jedem Sklaven-Empfänger derselbe Einheit-Nummercode gespeichert ist und jeder Empfänger mit Mitteln (11) versehen ist zum Ändern des Einheit-Nummercodes des zugeführten Steuerpakets um eine Einheit zu definieren, die eine niedrigere Lage in der Reihe von Fernsteuerempfänger hat.

## Revendications

1. Système de télécommande pour commander une pluralité d'unités dans un système audio et/ou vidéo, comprenant un émetteur pour émettre un paquet de commande (Fig. 2), comprenant un ordre de commande et un code de type d'unité caractérisant le type d'unité (TV, VCR, lecteur CD, etc.) que l'utilisateur souhaite commander, chacune de ces unités étant affectée d'un code de type d'unité locale qui y est associé, et comprenant un moyen récepteur de télécommande (7) destiné à recevoir un paquet de commande, et un moyen de réaction (8, 10) pour réagir à l'ordre de commande intégré dans le paquet de commande, lorsqu'il le faut, caractérisé en ce que pour permettre la distinction entre différentes unités du même genre du système audio et/ou vidéo qui sont à même de réagir aux mêmes ordres, chaque unité est affectée d'un code de numéro d'unité locale (1, 2, 3, ...) qui indique son numéro dans le système audio et/ou vidéo; le paquet de commande comprenant, en outre, un code de numéro d'unité indiquant celle de l'ensemble d'unités identiques à laquelle l'ordre associé est destiné; les moyens de réaction (8, 10) d'une unité étant à même de réagir à un ordre lorsque le paquet de commande reçu dans lequel cet ordre est intégré comprend, à la fois, un code de type d'unité et un code de numéro d'unité qui concordent avec le code de type d'unité locale et le code de numéro d'unité locale respectifs de cette unité.

2. Système de télécommande suivant la revendication 1, dans lequel un des récepteurs de télécommande associés aux diverses unités est un récepteur maître propre à recevoir le paquet de commande émis par l'émetteur et dans lequel les autres récepteurs de télécommande associés aux autres unités du système sont des récepteurs asservis qui sont connectés en cascade, cette connexion en cascade des récepteurs asservis étant connectée en cascade au récepteur maître, de sorte qu'un paquet de commande reçu dévale la cascade de récepteurs.

3. Système de télécommande suivant les revendications 1 et 2, dans lequel, dans le récepteur maître et dans chaque récepteur asservi, le même code de numéro d'unité est stocké et chaque récepteur est pourvu d'un moyen (11) pour modifier le code de numéro d'unité du paquet de commande qui y est appliqué en vue de définir une unité présentant une position plus basse dans la chaîne de récepteurs de télécommande.
